# EUROPÄISCHE PATENTANMELDUNG

(11) **EP 4 272 910 A1**
(43) Veröffentlichungstag der Anmeldung: **08.11.2023**
(21) Anmeldenummer: 23170160.8
(22) Anmeldetag: 26.04.2023
(51) Int. Cl.: B25J 19/00, B25J 19/06, B25J 15/00

(54) **SCHUTZVORRICHTUNG FÜR EINEN ENDEFFEKTOR EINES ROBOTERARMS EINES INDUSTRIEROBOTERS UND INDUSTRIEROBOTER**

(30) Priorität: 05.05.2022 DE 102022204453
(71) Anmelder: Dr. Doll Engineering GmbH, 74193 Schwaigern (DE)
(72) Erfinder: Doll, Sven, 76131 Karlsruhe (DE)
(74) Vertreter: Patentanwälte Ruff, Wilhelm, Beier, Dauster & Partner mbB

(57) **Zusammenfassung**

Die Erfindung betrifft eine Schutzvorrichtung (1) für einen Endeffektor (2) eines Roboterarms (3) eines Industrieroboters (4), aufweisend eine Gehäuseeinrichtung (5), welche zur Abschirmung des Endeffektors eingerichtet ist und einen entlang einer Axialrichtung (AR) zwischen einer Gehäuseoberseite (6) und einer Gehäuseunterseite (7) durchgängig längserstreckten Durchlass (8) aufweist, durch welchen - in einem betriebsfertig an dem Roboterarm montierten Zustand der Schutzvorrichtung - der Endeffektor axial relativbeweglich aus der Gehäuseeinrichtung heraus und in dieselbe hinein verlagerbar ist, und eine Schalteinrichtung (9), mit einer Oberseite (10) und einer entlang der Axialrichtung gegenüberliegenden Unterseite (11), wobei die Unterseite - in dem betriebsfertig montierten Zustand - wenigstens mittelbar an einem freien Ende (12) des Roboterarms abgestützt ist, wobei die Gehäuseunterseite wenigstens mittelbar kraftübertragend auf der Oberseite abgestützt ist, und wobei die Schalteinrichtung unter Einwirkung einer auf ihre Oberseite einwirkenden Kraft zwischen einem ausgelösten Schaltzustand und einem nicht ausgelösten Schaltzustand überführbar ist. Ferner betrifft die Erfindung einen Industrieroboter mit einer solchen Schutzvorrichtung.

## Beschreibung

Die Erfindung betrifft eine Schutzvorrichtung für einen Endeffektor eines Roboterarms eines Industrieroboters und einen Industrieroboter mit einer solchen Schutzvorrichtung.

Industrieroboter werden vermehrt als kooperierende Industrieroboter eingesetzt. Als kooperierende Industrieroboter werden im industriellen Bereich eingesetzte Roboter bezeichnet, die mit einer Person in einem gemeinsamen Arbeitsbereich zusammenarbeiten. Dabei wird üblicherweise auf physische Abschirmungen, wie beispielsweise Zäune, Absperrgitter oder dergleichen, zwischen der Person und dem Roboter verzichtet. Mangels einer solchen Abschirmung kann es grundsätzlich zu einer Kollision zwischen dem Roboter und der Person kommen, beispielsweise wenn diese unkoordiniert in einen Verschwenkbereich des Roboters eingreift. Um Personenschäden zu vermeiden und eine ausreichende Arbeitssicherheit zu gewährleisten, sind Schutzvorrichtungen erforderlich, die eine solche Kollision detektieren, um beispielsweise eine Notabschaltung des Roboters zu ermöglichen. Eine derartige Schutzvorrichtung ist aus der DE 10 2017 218 229 A1 bekannt und weist wenigstens ein Schutzelement auf, das zum Aufbringen auf einen Außenwandabschnitt des Industrieroboters vorgesehen ist. Zudem ist eine Steuereinheit vorgesehen, die mit dem Schutzelement verbunden und zum Steuern des Industrieroboters in Abhängigkeit eines elektrischen Kontaktzustands des Schutzelements eingerichtet ist.

Neben den kooperierenden Robotern werden im industriellen Bereich auch kollaborierende Roboter eingesetzt. Diese unterscheiden sich dadurch, dass ein bewusster, gewollter Kontakt zwischen der Person und dem Roboter stattfinden kann, da beide gleichzeitig an einem Projekt arbeiten und ihre Bewegungen gemeinsam koordinieren, z.B. bei einer teilautomatisierten Montage.

Sowohl bei kooperierenden Robotern als auch bei kollaborierenden Robotern geht jedoch insbesondere von dem Endeffektor des Industrieroboters eine erhöhte Gefahr für die im gleichen Arbeitsbereich befindliche Person aus. Als Endeffektor wird in der Robotik das letzte Element einer kinematischen Kette bezeichnet. Bei Industrierobotern kann es sich hierbei zum Beispiel um Greifsysteme oder um Werkzeugvorrichtungen, wie eine Schraubvorrichtung mit eingesetztem Schraubbit oder eine Bohrvorrichtung mit eingesetztem Bohrer, handeln. Aufgrund fehlender Nachgiebigkeiten sowie spitzer Kanten und Enden weisen diese Werkzeugvorrichtungen ein hohes Verletzungsrisiko auf. Hier besteht im Besonderen die Gefahr, dass Körperteile z.B. beim Anfahren einer Schraubposition oder einer Bohrposition eingeklemmt, durchgeschraubt oder durchgebohrt werden. Eine Schwierigkeit bei der Verwendung herkömmlicher Schutzvorrichtungen ist dabei, dass der Endeffektor, insbesondere an seinem spitzen Endbereich, für deren Anbringung zu klein ist bzw. dass dadurch die Funktionsweise des Endeffektors zu sehr beeinträchtigt wird. Dabei ist es in der Regel erwünscht, dass die Person zumindest bis zu einem Erreichen einer Arbeitsposition, z.B. der Schraub- oder Bohrposition, vollständig geschützt ist.

Aufgabe der Erfindung ist es, eine Schutzvorrichtung für einen Endeffektor eines Roboterarms eines Industrieroboters und einen Industrieroboter bereitzustellen, die eine hohe Betriebssicherheit ermöglichen, insbesondere bei einer unmittelbaren Zusammenarbeit zwischen Mensch und Roboter.

Diese Aufgabe wird für die Schutzvorrichtung durch die Merkmale des Anspruchs 1 und für den Industrieroboter durch die Merkmale des Anspruchs 14 gelöst. Vorteilhafte Ausgestaltungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Die erfindungsgemäße Schutzvorrichtung weist eine Gehäuseeinrichtung auf, die zur Abschirmung des Endeffektors eingerichtet ist. Dabei weist die Gehäuseeinrichtung einen entlang einer Axialrichtung zwischen einer Gehäuseoberseite und einer Gehäuseunterseite durchgängig längserstreckten Durchlass auf, durch welchen - in einem betriebsfertig an dem Roboterarm montierten Zustand der Schutzvorrichtung - der Endeffektor axial relativbeweglich aus der Gehäuseeinrichtung heraus und in dieselbe hinein verlagerbar ist. Die Schutzvorrichtung weist weiter eine Schalteinrichtung mit einer Oberseite und einer entlang der Axialrichtung gegenüberliegenden Unterseite auf, wobei die Unterseite - in dem betriebsfertig montierten Zustand - wenigstens mittelbar an einem freien Ende des Roboterarms abgestützt ist. Dabei ist die Gehäuseunterseite wenigstens mittelbar kraftübertragend auf der Oberseite der Schalteinrichtung abgestützt und die Schalteinrichtung ist unter Einwirkung einer auf ihre Oberseite einwirkenden Kraft zwischen einem ausgelösten Schaltzustand und einem nicht ausgelösten Schaltzustand überführbar. Durch die erfindungsgemäße Schutzvorrichtung ist die Person zumindest bis zu dem Erreichen der Arbeitsposition vollständig geschützt. Ist der Endeffektor eine Schraubvorrichtung, dann kann nach Erreichen der Arbeitsposition die Schraubvorrichtung aus der Gehäuseeinrichtung herausgefahren und der Schraubvorgang durchgeführt werden. Anschließend kann die Schraubvorrichtung in die Gehäuseeinrichtung hineingefahren werden, so dass die Schraubvorrichtung wieder vollumfänglich von der Gehäuseeinrichtung umgeben und folglich die Person geschützt ist. Neben der Abschirmung des Endeffektors in einem eingefahrenen Zustand dient die Gehäuseeinrichtung zur Kraftübertragung auf die Schalteinrichtung. Dabei ist die Gehäuseunterseite vorzugsweise derart auf der Oberseite der Schalteinrichtung abgestützt, dass sowohl Kräfte in Axialrichtung als auch Kräfte quer zu der Axialrichtung auf die Oberseite der Schalteinrichtung übertragen werden. Sofern während des Betriebs des Industrieroboters keine Kraft auf die Gehäuseeinrichtung und somit auf die Schalteinrichtung wirkt, weist die Schalteinrichtung den nicht ausgelösten Schaltzustand auf und/oder es wird kein Schaltsignal erzeugt. Dieser Schaltzustand kann auch als Ruhezustand bezeichnet werden. Wirkt jedoch auf die Schalteinrichtung eine von der Gehäuseeinrichtung übertragene, definierte Kraft, schaltet diese von dem Ruhezustand zu dem ausgelösten Schaltzustand. Diese Kraft kann daher auch als Schaltkraft bezeichnet werden. Dabei erzeugt die Schalteinrichtung vorzugsweise ein Schaltsignal, das z.B. eine Notabschaltung des Industrieroboters auslösen kann.

Die erfindungsgemäße Lösung eignet sich in besonders bevorzugter Weise für einen Industrieroboter in Gestalt eines Gelenkarmroboters. Die erfindungsgemäße Lösung kann aber auch für sonstige ortsfeste Einrichtungen, bewegliche Handhabungsgeräte oder dergleichen verwendet werden, die insbesondere einen ausfahrbaren Endeffektor aufweisen.

In Ausgestaltung der Erfindung weist die Gehäuseeinrichtung ein formstabiles Kraftübertragungselement, welches den Durchlass und eine zylindrische und/oder pyramidenförmige Gestalt aufweist, und eine formnachgiebige Dämpfungshülle auf, welche das Kraftübertragungselement ummantelt. Diese Ausgestaltung bietet konstruktive und funktionelle Vorteile. Ein Vorteil dieser Ausführungsform kann sein, dass durch das formstabile Kraftübertragungselement Kräfte zuverlässig direkt und/oder verlustfrei auf die Schalteinrichtung übertragen werden. Die Dämpfungshülle dient dazu, die Flächenpressung bei einer Klemmung oder einem Kontakt einer Person mit der Gehäuseeinrichtung zu reduzieren. Zudem erlaubt eine Änderung der Formnachgiebigkeit der Dämpfungshülle eine einfache konstruktive Anpassung der Sensibilität der Schalteinrichtung. Das formstabile Kraftübertragungselement ist aus einem formstabilen Material gefertigt. Dieses formstabile Material kann z.B. ein, vorzugsweise faserverstärkter, Kunststoff sein. Die Dämpfungshülle kann aus einem elastomeren Material und/oder aus einem Schaumstoff, vorzugsweise aus einem thermoplastischen Polyurethan, gefertigt sein. In alternativen Ausführungen kann die Gestalt des Kraftübertragungselements je nach Anwendungsfall frei wählbar gestaltet sein, z.B. kann die Gestalt des Kraftübertragungselements kegelförmig oder quaderförmig sein.

In weiterer Ausgestaltung weist die Schalteinrichtung einen formnachgiebigen Trägerkörper und wenigstens ein in den Trägerkörper eingebettetes Schaltelement auf, welches in Abhängigkeit der auf die Oberseite einwirkenden Kraft schaltbar ist. Dies stellt eine konstruktiv und funktionell vorteilhafte Realisierung für die Schalteinrichtung dar. Der Trägerkörper gewährleistet eine funktionsgerechte Kraftübertragung der Gehäuseeinrichtung auf das wenigstens eine Schaltelement. Zudem ermöglicht die nachgiebige Gestaltung ein gewisses Nachlaufen des Roboterarms, so dass bspw. eine geringfügig zeitverzögerte Abschaltung im Kollisionsfall ausgeglichen und ein "harter" Aufprall vermieden werden können. Das Schaltelement kann bereits bei der Herstellung des Trägerkörpers oder hiernach in diesen eingebracht werden. Bei einer Ausgestaltung weist der Trägerkörper zumindest an einer Seite eine Öffnung zum Einbringen des Schaltelements auf. Besonders vorteilhaft ist der Einsatz von zwei Schaltelementen in dem Trägerkörper. Hierdurch ist es möglich, eine Art Schaltfläche zu erzeugen, welche die von der Gehäuseeinrichtung auf den Trägerkörper übertragene Kraft zuverlässig auf die Schaltelemente weiterleitet. In alternativen Ausführungen kann das Schaltelement außerhalb, an der Unterseite des Trägerkörpers angeordnet sein.

In weiterer Ausgestaltung weist der Trägerkörper eine plattenförmige Gestalt auf und/oder das wenigstens eine Schaltelement ist eine Schaltleiste. Dies stellt eine konstruktiv und funktionell vorteilhafte Realisierung für die Schalteinrichtung dar. Die Schaltleiste kann z.B. auch als Bandschalter oder als Schaltstreifen bezeichnet werden. Als Schaltleiste kann eine elektrische oder eine optische Schaltleiste in grundsätzlich bekannter Weise eingesetzt werden. Die elektrische Schaltleiste weist in der Regel zwei Streifen aus einem elektrisch leitenden Material auf, die durch einen Isolator auf Abstand gehalten werden. Bei einer Kraftbeaufschlagung der Schaltleiste berühren sich die beiden Streifen und bilden somit einen geschlossenen Kontakt und/oder die Schaltleiste erzeugt ein Schaltsignal. Dabei ist die Schaltleiste in dem Trägerkörper vorzugsweise quer zur Axialrichtung längserstreckt. In alternativen Ausführungen kann der Trägerkörper eine beliebige, an den Endbereich des Roboterarms angepasste Gestalt aufweisen. Zudem kann alternativ die Schaltleiste eine an die Gestalt der Gehäuseeinrichtung angepasste Form aufweisen.

In weiterer Ausgestaltung weist die Gehäuseunterseite wenigstens zwei quer zur Axialrichtung beabstandete sowie axial in Richtung der Oberseite der Schalteinrichtung erhabene Kraftübertragungsabschnitte auf, welche mit der Oberseite der Schalteinrichtung, insbesondere fest, verbunden sind. Dies stellt eine konstruktiv und funktionell vorteilhafte Realisierung für die Kraftübertragung von der Gehäuseeinrichtung auf die Schalteinrichtung dar. Die Kraftübertragungsabschnitte sind an der Gehäuseunterseite lokal, vorzugsweise gleichmäßig verteilt, angeordnete Vorsprünge, wodurch sich eine Abstützfläche zwischen der Gehäuseunterseite und der Oberseite der Schalteinrichtung reduziert. Ein Vorteil dieser Ausführungsform kann sein, dass durch die reduzierte Abstützfläche die zum Auslösen der Schalteinrichtung benötigte Schaltkraft sich ebenfalls reduziert. Die Kraftübertragungsabschnitte können form- und/oder kraftschlüssig mit der Oberseite der Schalteinrichtung verbunden sein. In einer besonders vorteilhaften Ausführungsform weist die Gehäuseunterseite vier Kraftübertragungsabschnitte auf, welche vorzugsweise gleichmäßig auf der Gehäuseunterseite verteilt sind. Hierdurch kann eine weitere Reduzierung der benötigten Schaltkraft erreicht und gleichzeitig ein zuverlässiges Auslösen der Schalteinrichtung gewährleistet werden.

In weiterer Ausgestaltung weist der Trägerkörper einen entlang der Axialrichtung zwischen der Ober- und der Unterseite durchgängig längserstreckten Durchlass für den Endeffektor auf. Dies stellt eine konstruktiv und funktionell vorteilhafte Realisierung für Schalteinrichtung dar. Hierdurch ist es einerseits möglich, den Trägerkörper in einem, insbesondere endseitigen, Bereich des Endeffektors anzuordnen, wodurch die Abmessungen der Gehäuseeinrichtung kompakt gehalten werden kann. Vorzugsweise ist der Trägerkörper einstückig ausgebildet.

In weiterer Ausgestaltung weist der Trägerkörper eine Schaltkammer, in welcher das Schaltelement aufgenommen ist, und ein in Axialrichtung unterhalb oder oberhalb des Schaltelements angeordnetes und nach Art eines Knickstabes ausgebildetes Lagerelement auf. Dies stellt eine konstruktiv und funktionell besonders vorteilhafte Realisierung für die Schalteinrichtung dar. Das Lagerelement kann auch als Betätigungselement bezeichnet werden und ist dazu ausgebildet, die von der Gehäuseeinrichtung auf die Schalteinrichtung übertragenen Kräfte, die Schaltkräfte, an das wenigstens eine Schaltelement zu leiten und erst nach einem Auslösen des Schaltelements und nach Überschreiten einer definierten Knicklast einzuknicken. Dabei ermöglicht das Lagerelement eine Kraftübertragung, die weitestgehend frei von elastischen Verlusten ist, und somit ein zuverlässiges Auslösen des Schaltelements bereits bei geringen Kräften. Das Knicken des Lagerelements erfolgt mehr oder weniger schlagartig und ist deshalb von einer kontinuierlichen Deformation zu unterscheiden. Ein Vorteil dieser Ausführungsform kann sein, dass das Lagerelement ein zuverlässiges Auslösen des Schaltelements bei gleichzeitig vergrößertem Nachlaufweg und damit letztlich ein erhöhtes Sicherheitsniveau ermöglicht.

In weiterer Ausgestaltung ist das Lagerelement einstückig mit dem Trägerkörper ausgebildet. Dabei können das Lagerelement und der Trägerkörper aus gleichartigen Material ausgebildet sein. Gleichartig meint, dass die verwendeten Materialien weitgehend übereinstimmende, vorzugsweise identische, chemische Zusammensetzungen und mechanische Eigenschaften aufweisen. Ein Vorteil dieser Ausführungsform kann sein, dass das Lagerelement und der Trägerkörper in einem gemeinsamen Herstellungsprozess fertigbar sind und das Lagerelement funktionssicher und fest mit dem Trägerkörper verbunden ist.

In weiterer Ausgestaltung ist der Trägerkörper aus einem elastomeren Material und/oder aus einem Schaumstoff, vorzugsweise aus einem thermoplastischen Polyurethan, gefertigt. Ein Vorteil dieser Ausführungsform kann sein, dass sich durch die Fertigung des Trägerkörpers aus einem Schaumstoff das Bauteilgewicht im Vergleich zum Einsatz von herkömmlichen flexiblen Materialien deutlich reduziert. Besonders vorteilhaft wirkt sich diese Gewichtsersparnis bei Industrierobotern für den kooperierenden oder kollaborierenden Betrieb aus, da solche Roboter nur eine relativ geringe Traglast aufweisen.

In weiterer Ausgestaltung weist der Trägerkörper eine Shorehärte von 35 Shore-A bis 100 Shore-A, vorteilhaft von 70 Shore-A bis 80 Shore-A, besonders vorteilhaft von 75 Shore-A, auf. Durch die Wahl der Shorehärte des Materials kann die elastische Nachgiebigkeit des Trägerkörper beeinflusst werden. Dies beeinflusst wiederum die zum Auslösen des Schaltelements erforderliche Schaltkraft. Die Erfinder haben erkannt, dass eine Shorehärte von 35 Shore-A bis 100 Shore-A, vorteilhaft von 70 Shore-A bis 80 Shore-A, für den vorliegenden Anwendungsfall Vorteile bietet. Besonders vorteilhaft ist eine Shorehärte von 75 Shore-A.

In weiterer Ausgestaltung ist der Trägerkörper schichtweise additiv ausgebildet. Hierdurch kann eine vereinfachte und besonders flexible Herstellung erreicht werden. Durch die additive Ausbildung des Trägerkörpers kann auf besonders einfache Weise dessen äußere Gestaltung an eine Oberflächenkontur des freien Endes des Roboterarms angepasst werden. Zudem kann die innere Struktur des Trägerkörpers frei gestaltet werden. Bei dieser Ausgestaltung der Erfindung ist vorzugsweise der Trägerkörper einstückig mittels 3D-Druck gefertigt. Ein Vorteil dieser Ausführungsform kann sein, dass das Einbetten des Schaltelements in den Trägerkörper und eine Anpassung des Trägerkörpers an unterschiedlich gestaltete Schaltelemente besonders einfach ist. In alternativen Ausführungen kann der Trägerkörper z.B. durch einen Spritzgießprozess gefertigt sein, wobei vorzugsweise das mindestens eine Schaltelement direkt mit in den Trägerkörper eingegossen wird.

In weiterer Ausgestaltung ist eine Halteeinrichtung vorhanden, in welcher der Trägerkörper, insbesondere formschlüssig, aufgenommen ist, wobei die Halteeinrichtung zur Befestigung an dem freien Ende des Roboterarms eingerichtet ist. Hierdurch ist es möglich, die, vorzugsweise formstabile, Halteeinrichtung an eine Oberflächenkontur des freien Endes des Roboterarms anzupassen, ohne dabei die Gestalt des Trägerkörpers ändern zu müssen. Zudem kann hierdurch der Trägerkörper und somit die gesamte Schutzvorrichtung schnell und einfach an das freie Ende des Roboterarms montiert und demontiert werden. Die Halteeinrichtung kann dabei derart ausgebildet sein, dass diese den Trägerkörper in Umfangsrichtung umschließt und lediglich einen durchgängig längserstreckten Durchlass zur Aufnahme des Endeffektors und der Gehäuseeinrichtung aufweist. Weiter kann die Halteeinrichtung derart gestaltet sein, dass der Trägerkörper verdrehsicher und, sowohl in axialer als auch in radialer Richtung, fest in der Halteeinrichtung aufgenommen ist.

In weiterer Ausgestaltung weist die Halteeinrichtung zwei Halteschalen auf. Hierdurch ist es auf besonders einfache Weise möglich, den Trägerkörper aufzunehmen und an dem freien Ende des Roboterarms zu befestigen.

Der erfindungsgemäße Industrieroboter mit einer erfindungsgemäßen Schutzvorrichtung weist eine Steuereinheit auf, die mit der Schalteinrichtung verbunden und zum Steuern des Industrieroboters in Abhängigkeit des Schaltzustands der Schalteinrichtung eingerichtet ist. Bei einer Kollision der Gehäuseeinrichtung mit bspw. einem Körperteil wird die darauf einwirkende Kraft auf die Schalteinrichtung geleitet, wodurch die Schalteinrichtung von einem nicht ausgelösten Schaltzustand zu einem ausgelösten Schaltzustand überführt wird. Vorzugsweise erzeugt die Schalteinrichtung ein Schaltsignal, welches an die Steuereinheit weitergeleitet wird. Die Steuereinheit verarbeitet das Steuersignal und/oder den Schaltzustand, um beispielsweise eine Notabschaltung des Roboters zu veranlassen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Darstellung eine Ausführungsform eines erfindungsgemäßen Industrieroboters mit einem Roboterarm und einer Ausführungsform einer erfindungsgemäßen Schutzvorrichtung für einen Endeffektor des Roboterarms,
- Fig. 2: schematisch in einer Perspektivdarstellung den Industrieroboter nach Fig. 1, wobei der Endeffektor einen ausgefahrenen Zustand einnimmt,
- Fig. 3: schematisch in einer Perspektivdarstellung den Roboterarm mitsamt der Schutzvorrichtung, wobei der Endeffektor einen eingefahrenen Zustand einnimmt,
- Fig.4: schematisch in einer Perspektivdarstellung die Schutzvorrichtung in einem nicht an dem Roboterarm montierten Zustand,
- Fig. 5: schematisch in einer Explosivdarstellung die Schutzvorrichtung nach Fig. 4,
- Fig. 6: in perspektivischer Detaildarstellung ein Kraftübertragungselement der Schutzvorrichtung,
- Fig. 7: in perspektivischer Detaildarstellung eine Dämpfungshülle der Schutzvorrichtung,
- Fig. 8: in perspektivischer Detaildarstellung einen Trägerkörper der Schutzvorrichtung,
- Fig. 9: schematisch in einer Seitenansicht den Trägerkörper nach Fig. 8, und
- Fig. 10: in perspektivischer Detaildarstellung eine Halteschale einer Halteeinrichtung der Schutzvorrichtung.

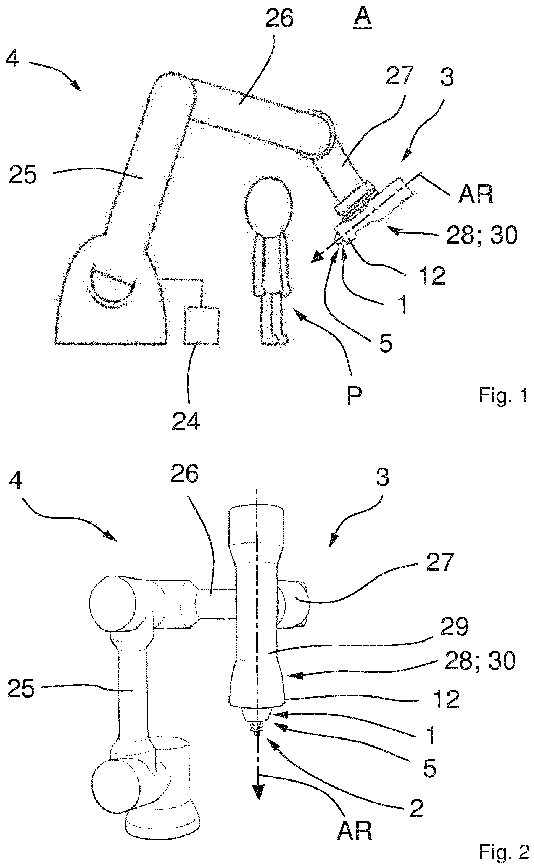

Ein Industrieroboter 4 nach Fig. 1 ist in Form eines Gelenkarmroboters zum automatisierten Ausführen von Fertigungs- und/oder Handhabungsschritten in einer industriellen Fertigung eingerichtet, wie bspw. Schraub- und/oder Bohrvorgänge. Der Industrieroboter 4 ist schematisch stark vereinfacht dargestellt und weist einen solchen grundsätzlich bekannten Aufbau mit mehreren relativ zueinander gelenkbeweglichen Gelenkarmen 25, 26, 27, 28 und einem endseitig des Gelenkarms 28 angeordneten Endeffektor 2 auf, wie in der Fig. 2 ersichtlich ist. Der Endeffektor 2 ist mittels einer gelenkbeweglichen Relativverlagerung der Gelenkarme 25, 26, 27, 28 innerhalb eines Arbeitsraums A verlagerbar. Zusätzlich ist der Endeffektor 2 in einer Axialrichtung AR relativbeweglich zu dem Gelenkarm 28 verlagerbar.

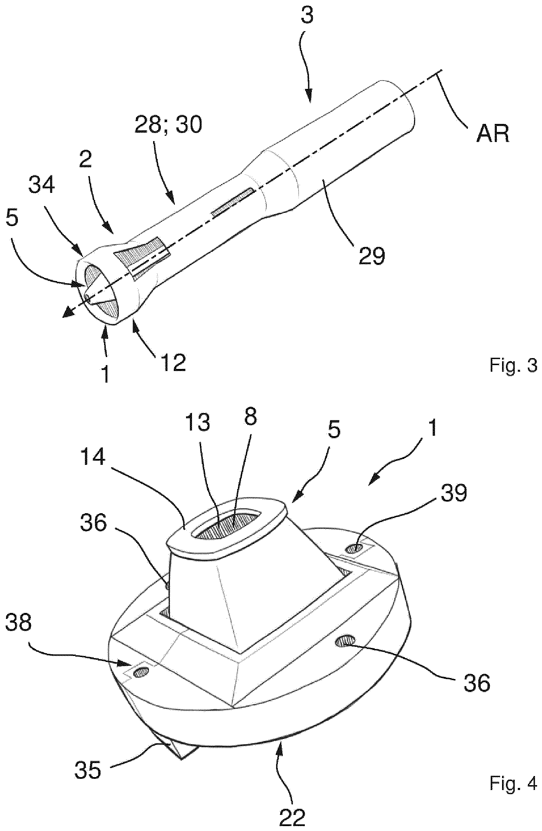

Bei der gezeigten Ausführungsform ist der Industrieroboter 4 zur Zusammenarbeit mit einer in dem Arbeitsbereich A befindlichen Person P vorgesehen (Fig. 1) und kann insoweit auch als kooperierender oder kollaborierender Industrieroboter bezeichnet werden. Die Person P ist bei der gezeigten Ausführungsform nicht durch physische Abschirmung, wie Zäune, Absperrgitter oder dergleichen von dem Industrieroboter 4 abgeschirmt. Mangels einer solchen Abschirmung besteht grundsätzlich eine Kollisionsgefahr zwischen der Person P und dem Industrieroboter 4, beispielsweise bei einem unkoordinierten Eingriff der Person P in den Arbeitsbereich A oder bei einer fehlerhaften Bewegung der Gelenkarme 25, 26, 27, 28. Bei einer solchen Kollision kann die Person P Schaden nehmen. Um Personenschäden entgegenzuwirken, weist der Industrieroboter 4, in diesem Ausführungsbeispiel der Gelenkarm 28, eine Schutzhaut 29 auf, wie in den Fig. 2 und 3 ersichtlich ist. Die Schutzhaut 29 weist ein elastomeres Material auf kann in Form eines Schaumstoffs, vorzugsweise aus einem thermoplastischen Polyurethan, gefertigt sein.

Ein besonderes Verletzungsrisiko geht jedoch von dem Endeffektor 2 des Industrieroboters 4 aus, da dieser in der Regel spitze Kanten und Enden aufweist, wie dies bspw. bei Schraub- und Bohrvorrichtungen der Fall ist. Herkömmliche Schutzvorrichtungen sind aus konstruktiver und funktioneller Sicht nicht oder nicht ohne Weiteres an dem Endeffektor 2 anbringbar, sodass der Industrieroboter 4 für den Endeffektor 2 eine spezielle Schutzvorrichtung 1 aufweist.

Bei der gezeigten Ausführungsform ist der Gelenkarm 28 in Gestalt eines Schraubsystems 30 ausgebildet. Das Schraubsystem 30 ist an den Gelenkarm 27 montiert, insbesondere angeflanscht. Dies ist insbesondere in den Fig. 1 und 2 ersichtlich. Dabei weist das Schraubsystem 30 endseitig den Endeffektor 2 auf. Der Endeffektor 2 ist vorliegend als Schraubvorrichtung ausgeführt. Der Endeffektor 2, d.h. vorliegend die Schraubvorrichtung, kann einen in den Figuren nicht dargestellten Schraubbit aufweisen.

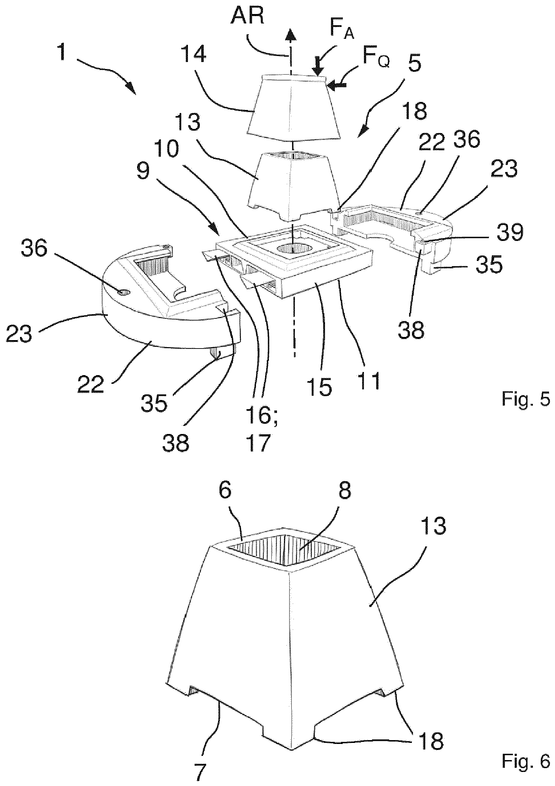

Die Schutzvorrichtung 1 weist eine Gehäuseeinrichtung 5 und eine Schalteinrichtung 9 auf, wie insbesondere in der Fig. 5 ersichtlich ist.

Die Gehäuseeinrichtung 5 ist zur Abschirmung des Endeffektors 2 eingerichtet, wie dies in der Fig. 3 bei einem eingefahrenen Zustand des Endeffektors 2 erstlich ist. In der Fig. 2 befindet sich der Endeffektor 2 in einem ausgefahrenen Zustand. Die Gehäuseeinrichtung 5 weist weiter einen entlang der Axialrichtung AR zwischen einer Gehäuseoberseite 6 und einer Gehäuseunterseite 7 durchgängig längserstreckten Durchlass 8 auf, wie dies insbesondere in der Fig. 5 ersichtlich ist. Durch diesen Durchlass 8 ist - in einem betriebsfertig an dem Roboterarm 3 montierten Zustand der Schutzvorrichtung 1 - der Endeffektor 2 axial relativbeweglich aus der Gehäuseeinrichtung 5 heraus und in dieselbe hinein verlagerbar. Dadurch kann während einer Bewegung des Roboterarms 3, insbesondere des Gelenkarms 28 bzw. des Schraubsystems 30, im Arbeitsbereich A der Endeffektor 2 eingefahren und von der Gehäuseeinrichtung 5 abgeschirmt werden. Nach dem Erreichen einer Arbeitsposition kann der Endeffektor 2 aus der Gehäuseeinrichtung 5 herausgefahren und bspw. ein Schraub- oder Bohrvorgang durchgeführt werden.

Die Schalteinrichtung 9 weist eine Oberseite 10 und eine entlang der Axialrichtung AR gegenüberliegende Unterseite 11 auf, wobei die Unterseite 11 - in dem betriebsfertig montierten Zustand - wenigstens mittelbar an einem freien Ende 12 des Roboterarms 3, insbesondere des Gelenkarms 28 bzw. des Schraubsystems 30, abgestützt ist. Die Gehäuseunterseite 7 ist wenigstens mittelbar kraftübertragend auf der Oberseite 10 abgestützt. In dem gezeigten Ausführungsbeispiel ist die Gehäuseunterseite 7 unmittelbar auf der Oberseite 10 abgestützt, wie in der Fig. 5 ersichtlich ist. Die Schalteinrichtung 9 ist unter Einwirkung einer auf ihre Oberseite 10 einwirkenden Kraft zwischen einem ausgelösten Schaltzustand und einem nicht ausgelösten Schaltzustand überführbar. Dabei ist die Gehäuseunterseite 7 auf der Oberseite 10 vorliegend derart abgestützt, dass sowohl Kräfte in Axialrichtung AR, auch als Axialkräfte Fa, bezeichnet, als auch Kräfte quer zu der Axialrichtung AR, auch als Querkräfte F_{Q} bezeichnet, auf die Oberseite 10 der Schalteinrichtung 9 übertragen werden. Die Querkräfte F_{Q} werden durch eine Hebelwirkung um einen in den Figuren nicht dargestellten Drehpunkt in Axialkräfte Fa, "umgewandelt". Die auf die Oberseite 10 der Schalteinrichtung 9 übertragenen Kräfte werden auch als Schaltkräfte bezeichnet. Wirkt eine solche Schaltkraft auf die Schalteinrichtung 9 schaltet diese von dem nicht ausgelösten Schaltzustand auf den ausgelösten Schaltzustand. Dabei erzeugt die Schalteinrichtung 9 vorliegend ein Schaltsignal, das z.B. eine Notabschaltung des Industrieroboters 4 auslösen kann. Dazu weist der Industrieroboters 4 gemäß dem gezeigten Ausführungsbeispiel der Fig. 1 eine Steuereinheit 24 auf, die mit der Schalteinrichtung 9 verbunden und zum Steuern des Industrieroboters 4 in Abhängigkeit des Schaltzustands der Schalteinrichtung 9 eingerichtet ist. Die Steuereinheit 24 ist anhand Fig. 1 lediglich schematisch dargestellt.

Vorliegend weist die Gehäuseeinrichtung 5 ein formstabiles Kraftübertragungselement 13 auf, welches den Durchlass 8 und eine zylindrische und/oder pyramidenförmige Gestalt aufweist. Bei der gezeigten Ausführungsform weist die Gehäuseeinrichtung 5 eine pyramidenförmige Gestalt auf, wie in den Fig. 5 und 6 ersichtlich ist.

Weiter weist die Gehäuseeinrichtung 5 eine vorliegend formnachgiebige Dämpfungshülle 14 auf, welche das Kraftübertragungselement 13 ummantelt. Durch die Dämpfungshülle 14 wird eine Flächenpressung z.B. bei einer Klemmung oder bei einem Kontakt einer Person mit der Gehäuseeinrichtung 5 reduziert. Die Dämpfungshülle 14 ist vorteilhaft, aber nicht zwingend erforderlich.

Vorliegend ist das Kraftübertragungselement 13 aus einem, vorzugsweise faserverstärkten, Kunststoff gefertigt. Die Dämpfungshülle 14 ist in dem gezeigten Ausführungsbeispiel aus einem Schaumstoffwerkstoff auf vorzugsweise thermoplastischen Polyurethanbasis gefertigt.

Bei zeichnerisch nicht dargestellten Ausführungsformen kann die Gestalt des Kraftübertragungselements 13 je nach Anwendungsfall frei wählbar gestaltet sein.

Vorliegend weist die Schalteinrichtung 9 einen formnachgiebigen Trägerkörper 15 und wenigstens ein in den Trägerkörper 15 eingebettetes Schaltelement 16 auf, welches in Abhängigkeit der auf die Oberseite 10 einwirkenden Kraft schaltbar ist. Die Formnachgiebigkeit des Trägerkörpers 15 gewährleistet eine funktionsgerechte Kraftübertragung der Gehäuseeinrichtung 5 auf das wenigstens eine Schaltelement 16. Vorliegend ist das Schaltelement 16 seitlich in den Trägerkörper 15 eingesteckt, wie in der Fig. 5 ersichtlich ist. Dazu weist der Trägerkörper 15 bei dieser Ausführungsform zumindest an einer Seite 31 eine Öffnung 32 auf. Bei der gezeigten Ausführungsform sind zwei Schaltelemente 16 in den Trägerkörper 15 eingebettet.

Bei zeichnerisch nicht dargestellten Ausführungsformen kann das Schaltelement 16 außerhalb, an der Unterseite 11 des Trägerkörpers 15 angeordnet sein.

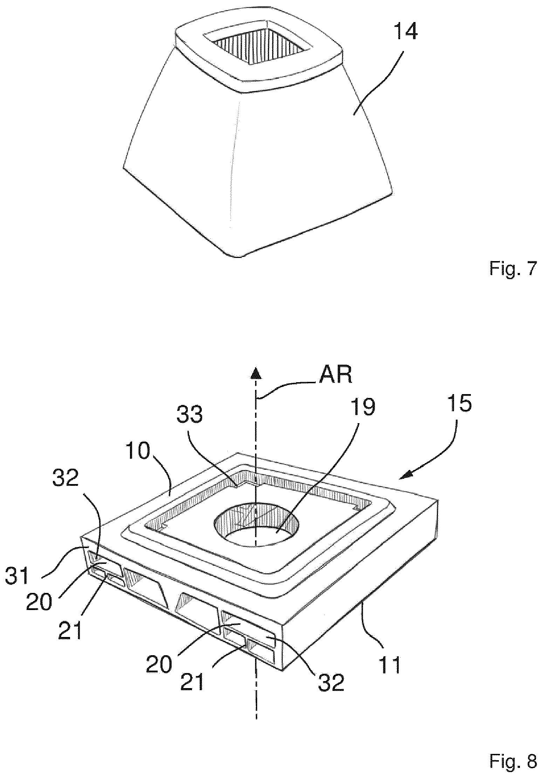

Gemäß den Fig. 5 und 8 weist der Trägerkörper 15 vorliegend eine plattenförmige Gestalt auf und das wenigstens eine Schaltelement 16 ist eine Schaltleiste 17. Unter Axialkraftbeaufschlagung an jeder beliebigen Längsstelle der Schaltleiste 17 wird diese von dem nicht ausgelösten Schaltzustand in den ausgelösten Schaltzustand überführt. Da der Aufbau und die Funktionsweise der Schaltleiste 17 prinzipiell bekannt sind, kann auf weitere diesbezügliche Erläuterungen verzichtet werden. Weiter alternativ kann das Schaltelement 16 auch ein Bandschalter oder ein Schaltstreifen sein. In dem gezeigten Ausführungsbeispiel sind die zwei Schaltleisten 17 in dem Trägerkörper 15 quer zur Axialrichtung AR längserstreckt.

Bei alternativen Ausführungen kann der Trägerkörper 15 eine beliebige, an einen Endbereich des Roboterarms 3 angepasste Gestalt aufweisen. Weiter alternativ kann die Schaltleiste 17 eine an die Gestalt der Gehäuseeinrichtung 5 angepasste Form aufweisen.

Vorliegend weist die Gehäuseunterseite 7 wenigstens zwei quer zur Axialrichtung AR beabstandete sowie axial in Richtung der Oberseite 10 der Schalteinrichtung 9 erhabene Kraftübertragungsabschnitte 18 auf, die mit der Oberseite 10, insbesondere fest, verbunden sind. Hierdurch wird eine Abstützfläche zwischen der Gehäuseunterseite 7 und der Oberseite 10 der Schalteinrichtung 9 reduziert, wodurch sich ebenfalls die zum Auslösen der Schaltleisten 17 benötigte Schaltkraft reduziert. Bei der gezeigten Ausführungsform weist die Gehäuseunterseite 7 vier Kraftübertragungsabschnitte 18 auf, wie in den Fig. 5 und 6 ersichtlich ist. Vorliegend ist die Gehäuseeinrichtung 5 in Form eines Pyramidenstumpfs mit einer quadratischen Grundfläche ausgebildet. Dabei sind die vier Kraftübertragungsabschnitte 18 in den vier Eckbereichen der Pyramidengrundfläche angeordnet. Die Oberseite 10 der Schalteinrichtung 9 weist in diesem Ausführungsbeispiel zu den Kraftübertragungsabschnitten 18 komplementäre Vertiefungen 33, in denen die Kraftübertragungsabschnitte 18 formschlüssig aufgenommen sind, wie in der Fig. 8 ersichtlich ist. Zusätzlich oder alternativ können die Kraftübertragungsabschnitte 18 kraftschlüssig und/oder formschlüssig mit der Oberseite 10 verbunden sein.

Vorliegend weist der Trägerkörper 15 einen entlang der Axialrichtung AR zwischen der Ober- und der Unterseite 10,11 durchgängig längserstreckten Durchlass 19 für den Endeffektor 2 auf. Hierdurch ist es einerseits möglich, den Trägerkörper 15 in einem endseitigen Bereich 34 des Endeffektors 2 anzuordnen, wie in der Fig. 3 ersichtlich ist. Andererseits kann dadurch der Trägerkörper 15, wie vorliegend, einstückig ausgebildet werden, wie in der Fig. 8 ersichtlich ist.

Bei alternativen Ausführungsformen ist der Trägerkörper 15 zwei- oder mehrteilig ausgebildet und radial um den Endeffektor 2 verteilt angeordnet.

Weiter weist der Trägerkörper 15 vorliegend eine Schaltkammer 20 auf, in welcher das Schaltelement 16 aufgenommen ist, wie insbesondere in der Fig. 8 ersichtlich ist. Bei der gezeigten Ausführungsform ist gemäß der Fig. 5 und 8 das Schaltelement 16 durch die Öffnung 32 an der Seite 31 des Trägerkörpers 15 in die Schaltkammer 20 aufgenommen.

Zusätzlich weist der Trägerkörper 15 ein in Axialrichtung AR unterhalb oder oberhalb des Schaltelements 16 angeordnetes und nach Art eines Knickstabes ausgebildetes Lagerelement 21 auf. Das Lagerelement 21 ist dazu ausgebildet, die von der Gehäuseeinrichtung 5 auf die Schalteinrichtung 9 übertragenen Kräfte an das wenigstens eine Schaltelement 16 zu leiten und/oder abzuleiten und erst nach einem Auslösen des Schaltelements 16 und nach Überschreiten einer definierten Knicklast einzuknicken. Hierdurch wird eine Kraftübertragung, die weitestgehend frei von elastischen Verlusten ist, und somit ein zuverlässiges Auslösen des Schaltelements 16 auch bei geringen Kräften sichergestellt. Durch das Knicken des Lagerelements 21 und einem dadurch vergrößertem Nachlaufweg wird zudem das Sicherheitsniveau erhöht.

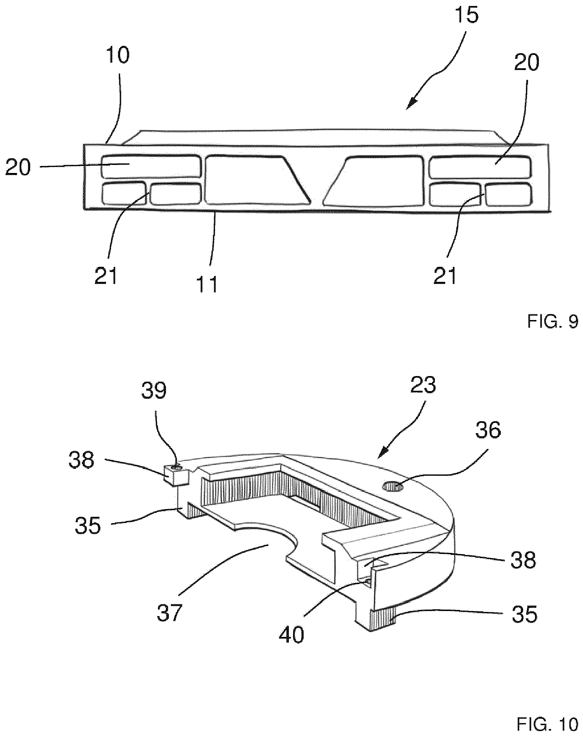

Vorliegend ist das Lagerelement 21 einstückig mit dem Trägerkörper 15 ausgebildet, wie in den Fig. 8 und 9 ersichtlich ist. In dem gezeigten Ausführungsbeispiel sind das Lagerelement 21 und der Trägerkörper 15 aus gleichartigen Material ausgebildet. Hierdurch kann das Lagerelement 21 und der Trägerkörper 15 in einem gemeinsamen Herstellungsprozess gefertigt werden und das Lagerelement 21 ist funktionssicher und fest mit dem Trägerkörper 15 verbunden.

Vorliegend ist der Trägerkörper 15 aus einem elastomeren Material und/oder aus einem Schaumstoff gefertigt. Bei der gezeigten Ausführungsform ist der Trägerkörper 15 aus einem Schaumstoff auf einer thermoplastischen Polyurethanbasis gefertigt. Durch die Fertigung des Trägerkörpers 15 aus einem Schaumstoff kann sein Bauteilgewicht im Vergleich zum Einsatz von herkömmlichen flexiblen Materialien deutlich reduziert werden.

Bei der gezeigten Ausführungsform weist der Trägerkörper 15 eine Shorehärte von 75 Shore-A, auf. Durch die Wahl der Shorehärte des Materials kann die elastische Nachgiebigkeit des Trägerkörper 15 und dadurch die zum Auslösen des Schaltelements 16 erforderliche Schaltkraft beeinflusst werden.

In einer vorteilhaften Ausführung ist der Trägerkörper 15 schichtweise additiv ausgebildet. Hierdurch kann eine vereinfachte und besonders flexible Herstellung erreicht werden. Bei der gezeigten Ausführungsform ist der Trägerkörper 15 mittels eines hierfür geeigneten 3D-Druckverfahrens ausgebildet.

Ferner ist vorliegend eine Halteeinrichtung 22 vorhanden, in welcher der Trägerkörper 15 aufgenommen ist. Bei der gezeigten Ausführungsform ist der Trägerkörper 15 formschlüssig in der Halteeinrichtung 22 aufgenommen. Die Halteeinrichtung 22 ist zur Befestigung an dem freien Ende 12 des Roboterarms 3 eingerichtet. Dazu weist die Halteeinrichtung 22 an einer Unterseite mindestens einen Vorsprung 35 auf (Fig. 4 und 5), der in eine dazu komplementäre, in den Figuren nicht dargestellte Vertiefung an dem freien Ende 12 des Roboterarms 3 formschlüssig aufgenommen und verdrehsicher gehalten ist. Vorliegend weist die Halteeinrichtung 22 zusätzlich mindestens eine Bohrung 36 auf, wodurch die Halteeinrichtung 22 mittels einer Schraubverbindung an dem Roboterarm 3 befestigbar ist. Die Halteeinrichtung 22 umschließt den Trägerkörper 15 in Umfangsrichtung und weist einen durchgängig längserstreckten Durchlass 37 zur Aufnahme des Endeffektors 2 und der Gehäuseeinrichtung 5 auf. Vorteilhaft ist die Halteeinrichtung 22 aus einem formstabilen Material gefertigt.

Zudem weist die Halteeinrichtung 22 vorliegend zwei Halteschalen 23 auf, wie in den Fig. 4, 5 und 10 ersichtlich ist. Dabei sind die Halteschalen 23 durch eine Steckverbindung 38 miteinander verbindbar. Vorliegend weisen die Halteschalen 23 zusätzlich Bohrungen 39, 40 auf, um die beiden Halteschalen 23 mittels Schraubverbindungen fest miteinander zu verbinden.

## Patentansprüche

1. Schutzvorrichtung (1) für einen Endeffektor (2) eines Roboterarms (3) eines Industrieroboters (4), aufweisend:
- eine Gehäuseeinrichtung (5), welche zur Abschirmung des Endeffektors (2) eingerichtet ist und einen entlang einer Axialrichtung (AR) zwischen einer Gehäuseoberseite (6) und einer Gehäuseunterseite (7) durchgängig längserstreckten Durchlass (8) aufweist, durch welchen - in einem betriebsfertig an dem Roboterarm (3) montierten Zustand der Schutzvorrichtung (1) - der Endeffektor (2) axial relativbeweglich aus der Gehäuseeinrichtung (5) heraus und in dieselbe hinein verlagerbar ist, und
- eine Schalteinrichtung (9), mit einer Oberseite (10) und einer entlang der Axialrichtung (AR) gegenüberliegenden Unterseite (11), wobei die Unterseite (11) - in dem betriebsfertig montierten Zustand - wenigstens mittelbar an einem freien Ende (12) des Roboterarms (3) abgestützt ist, wobei die Gehäuseunterseite (7) wenigstens mittelbar kraftübertragend auf der Oberseite (10) abgestützt ist, und wobei die Schalteinrichtung (9) unter Einwirkung einer auf ihre Oberseite (10) einwirkenden Kraft zwischen einem ausgelösten Schaltzustand und einem nicht ausgelösten Schaltzustand überführbar ist.

2. Schutzvorrichtung (1) nach Anspruch 1, **dadurch gekennzeichnet, dass** die Gehäuseeinrichtung (5) ein formstabiles Kraftübertragungselement (13), welches den Durchlass (8) und eine zylindrische und/oder pyramidenförmige Gestalt aufweist, und eine formnachgiebige Dämpfungshülle (14) aufweist, welche das Kraftübertragungselement (13) ummantelt.

3. Schutzvorrichtung (1) nach Anspruch 1 oder 2, **dadurch gekennzeichnet, dass** die Schalteinrichtung (9) einen formnachgiebigen Trägerkörper (15) und wenigstens ein in den Trägerkörper (15) eingebettetes Schaltelement (16) aufweist, welches in Abhängigkeit der auf die Oberseite (10) einwirkenden Kraft schaltbar ist.

4. Schutzvorrichtung (1) nach Anspruch 3, **dadurch gekennzeichnet, dass** der Trägerkörper (15) eine plattenförmige Gestalt aufweist, und/oder dass das wenigstens eine Schaltelement (16) eine Schaltleiste (17) ist.

5. Schutzvorrichtung (1) nach einem der vorhergehenden Ansprüche, **dadurch gekennzeichnet, dass** die Gehäuseunterseite (7) wenigstens zwei quer zur Axialrichtung (AR) beabstandete sowie axial in Richtung der Oberseite (10) der Schalteinrichtung (9) erhabene Kraftübertragungsabschnitte (18) aufweist, welche mit der Oberseite (10) der Schalteinrichtung (9), insbesondere fest, verbunden sind.

6. Schutzvorrichtung (1) nach einem der Ansprüche 3 bis 5, **dadurch gekennzeichnet, dass** der Trägerkörper (15) einen entlang der Axialrichtung (AR) zwischen der Ober- und der Unterseite (10, 11) durchgängig längserstreckten Durchlass (19) für den Endeffektor (2) aufweist.

7. Schutzvorrichtung (1) nach einem der Ansprüche 3 bis 6, **dadurch gekennzeichnet, dass** der Trägerkörper (15) eine Schaltkammer (20), in welcher das Schaltelement (16) aufgenommen ist, und ein in Axialrichtung (AR) unterhalb oder oberhalb des Schaltelements (16) angeordnetes und nach Art eines Knickstabes ausgebildetes Lagerelement (21) aufweist.

8. Schutzvorrichtung (1) nach Anspruch 7, **dadurch gekennzeichnet, dass** das Lagerelement (21) einstückig mit dem Trägerkörper (15) ausgebildet ist.

9. Schutzvorrichtung (1) nach einem der Ansprüche 3 bis 8, **dadurch gekennzeichnet, dass** der Trägerkörper (15) aus einem elastomeren Material und/oder aus einem Schaumstoff, vorzugsweise aus einem thermoplastischen Polyurethan, gefertigt ist.

10. Schutzvorrichtung (1) nach einem der Ansprüche 3 bis 9, **dadurch gekennzeichnet, dass** der Trägerkörper (15) eine Shorehärte von 35 Shore-A bis 100 Shore-A, bevorzugt von 70 Shore-A bis 80 Shore-A, besonders bevorzugt von 75 Shore-A, aufweist.

11. Schutzvorrichtung (1) nach einem der Ansprüche 3 bis 10, **dadurch gekennzeichnet, dass** der Trägerkörper (15) schichtweise additiv ausgebildet ist.

12. Schutzvorrichtung (1) nach einem der Ansprüche 3 bis 11, **dadurch gekennzeichnet, dass** eine Halteeinrichtung (22) vorhanden ist, in welcher der Trägerkörper (15), insbesondere formschlüssig, aufgenommen ist, wobei die Halteeinrichtung (22) zur Befestigung an dem freien Ende (12) des Roboterarms (3) eingerichtet ist.

13. Schutzvorrichtung (1) nach Anspruch 12, weiter **dadurch gekennzeichnet, dass** die Halteeinrichtung (22) zwei Halteschalen (23) aufweist.

14. Industrieroboter (4) mit einer Schutzvorrichtung (1) nach wenigstens einem der vorhergehenden Ansprüche mit einer Steuereinheit (24), die mit der Schalteinrichtung (9) verbunden und zum Steuern des Industrieroboters (4) in Abhängigkeit des Schaltzustands der Schalteinrichtung (9) eingerichtet ist.
